# EUROPÄISCHE PATENTANMELDUNG

(11) **EP 4 556 426 A1**
(43) Veröffentlichungstag der Anmeldung: **21.05.2025**
(21) Anmeldenummer: 24211473.4
(22) Anmeldetag: 07.11.2024
(51) Int. Cl.: B66C 1/66

(54) **VORRICHTUNG ZUM ANSCHLAGEN, HEBEN ODER ZURREN EINER LAST, MIT EINER FEDEREINRICHTUNG**

(30) Priorität: 09.11.2023 DE 102023131194
(71) Anmelder: RUD Ketten Rieger & Dietz GmbH u. Co. KG, 73432 Aalen (DE)
(72) Erfinder: HAAS, Simon, 73571 Horn (DE); BETZLER, Michael, 73453 Abtsgmünd (DE)
(74) Vertreter: Grünecker Patent- und Rechtsanwälte PartG mbB

(57) **Zusammenfassung**

Die Erfindung betrifft eine Vorrichtung (1) mit einem Halteabschnitt (2), an dem ein Anschlag-, Hebe- oder Zurrmittel (4) anbringbar ist. Die Vorrichtung dient beispielsweise zum Anschlagen von Hebemitteln an einer Last oder, wenn die Vorrichtung an der Last angebracht ist, zum Heben oder Zurren der Last. Die Vorrichtung weist einen Sockel (10) auf, an dem sich der Halteabschnitt befindet. Durch den Sockel erstreckt sich ein Gewindesperrbolzen (14) mit einem radial beweglichen und verriegelbaren Gewindesegment (34). Der Gewindesperrbolzen dient zur Befestigung des Sockels an einem Gegenstand (20), beispielsweise der Last. Durch den Gewindesperrbolzen wird eine Klemmkraft (30) erzeugt, die den Sockel und damit die Vorrichtung am Gegenstand hält. Um die Montage zu erleichtern, ist eine in Axialrichtung (16) stauchbare Federeinrichtung (42) im Kraftfluss (28) der Klemmkraft angeordnet.

## Beschreibung

Die Erfindung betrifft eine Vorrichtung mit einem Halteabschnitt, an dem ein Anschlag-, Hebe- oder Zurrmittel, wie beispielsweise ein Gurt, ein Seil oder eine Kette anbringbar ist, mit einem Sockel, an dem sich der Halteabschnitt befindet, und mit einem sich in einer Axialrichtung wenigstens abschnittsweise durch den Sockel erstreckenden und mit wenigstens einem radial beweglichen Gewindesegment versehenen Gewindesperrbolzen zum Befestigen des Sockels an einem mit einer Gewindeöffnung versehenen Gegenstand mittels einer Klemmkraft.

Eine derartige Vorrichtung ist beispielsweise aus der DE 20 2019 106 029 U1 bekannt. Die Vorrichtung wird mit Hilfe des Gewindesperrbolzens an einer zu hebenden oder festzuzurrenden Last befestigt. Eine solche Vorrichtung kann allerdings auch zum Festzurren von Lasten verwendet werden. In diesem Fall ist sie beispielsweise auf einer Ladefläche angebracht.

Die Vorrichtungen müssen hohe Sicherheitsanforderungen erfüllen, denn ein Versagen, insbesondere ein Bruch, kann zu Sach- oder Personenschäden führen. Eine unsachgemäße Verwendung ist nach Möglichkeit konstruktiv auszuschließen, denn sie erhöht das Versagensrisiko. Eine unsachgemäße Verwendung kann zum Beispiel darin liegen, dass die Vorrichtungen nicht ausreichend fest an dem Gegenstand befestigt werden, die Klemmkraft also zu niedrig ist. In diesem Fall kann bei einer Belastung quer zur Axialrichtung der Gewindesperrbolzen brechen; außerdem kann sich die Befestigung lockern.

Die Handhabung der oben genannten Vorrichtungen mit Gewindesperrbolzen ist nicht ganz einfach.

Zunächst wird der Gewindesperrbolzen mit eingefahrenem Gewindesegment in die Gewindeöffnung eingesteckt, bis die Unterseite des Sockels am Gegenstand anschlägt. Dann fährt das Gewindesegment beispielsweise durch Betätigen eines Federmechanismus radial gegen das Gewinde der Gewindeöffnung. Beim Ausfahren des Gewindesegments ist nicht gewährleistet, dass das Gewindesegment in vollständigen Eingriff mit dem Gewinde der Gewindeöffnung gelangt, also Gewindeflanke vollständig an Gewindeflanke anliegt. So können beispielsweise beim Ausfahren das Außengewinde des Gewindesegments und das Innengewinde der Gewindeöffnung Spitze-an-Spitze liegen. Ebenso ist es möglich, dass nur ein Teil der Gewindeflanken aneinander anliegt, das Außengewinde des Gewindesegments also nicht vollständig in das Innengewinde der Gewindeöffnung eintaucht. In beiden Fällen ist die Vorrichtung nicht vollständig am Gegenstand montiert. Im Gebrauch kann sich ein unvollständig montierter Gewindesperrbolzen bei Belastung lockern oder lösen. Der Gewindebolzen sollte daher nach dem Einstecken angezogen werden, um einen vollständigen Eingriff der Gewinde von Gewindesegment und Gewindeöffnung sicherzustellen. Üblicherweise ist ein Anziehen von Hand ausreichend. Insbesondere kann ein Anziehen von Hand auch ohne Werkzeug erfolgen, indem die Hand die Vorrichtung direkt umfasst und dreht.

Wurde der Gewindesperrbolzen allerdings mit einer großen Kraft in die Gewindeöffnung gesteckt, so lässt er sich unter Umständen mit Handkraft nicht mehr weiter anziehen. Der Benutzer muss dann die Schraubverbindung durch Drehen zunächst lösen, um Außen- und Innengewinde miteinander zu verriegeln. Erst dann kann der Gewindesperrbolzen wieder fest angezogen werden.

Der Montageprozess ist damit nicht exakt definiert. Es hängt davon ab, inwieweit das Gewindesegment im Innengewinde der Gewindeöffnung verriegelt, ob der Gewindesperrbolzen weiter angezogen werden kann oder zunächst gelöst werden muss. Dies ist wenig bedienungsfreundlich und potenziell unsicher. Wird der Gewindesperrbolzen nach dem Einstecken nur angezogen, so besteht keine Sicherheit darüber, dass die Gewinde vollständig verriegelt sind. In einem solchen Fall wäre die Vorrichtung unsachgemäß befestigt.

Der Erfindung liegt folglich die Aufgabe zugrunde, die eingangs genannte Vorrichtung so zu verbessern, dass sich die Gefahr eines unsachgemäßen Gebrauchs verringert.

Gelöst wird diese Aufgabe dadurch, dass die Vorrichtung mit einer am Sockel angebrachten, in der Axialrichtung stauchbaren Federeinrichtung versehen ist, die sich im Kraftfluss der Klemmkraft befindet.

Mithilfe der Federeinrichtung im Kraftfluss der Klemmkraft lässt sich die Gefahr einer unsachgemäßen Montage der Vorrichtung deutlich verringern.

Aufgrund der Federeinrichtung, ihrer Anordnung im Kraftfluss der Klemmkraft und ihrer axialen Stauchbarkeit ist sichergestellt, dass der Sockel nach dem Einstecken nicht fest am Gegenstand anliegt und ausreichend axiales Spiel vorhanden ist, um den Gewindesperrbolzen anzuziehen. Nach dem Einstecken kann der Gewindesperrbolzen unter fortgesetzter Stauchung der Federeinrichtung bis zum vorgeschriebenen Anzugsmoment weiter angezogen werden. Ein Lösen des Gewindesperrbolzens ist nicht mehr notwendig.

Ein weiterer Vorteil der Federeinrichtung ist darin zu sehen, dass die Feder bereits dann eine geringe Klemmkraft ausübt, wenn sie bei nicht bis zum Anschlag eingesetztem Gewindesperrbolzen nur etwas gestaucht ist. Dadurch ist die Vorrichtung verliersicher am Gegenstand gehalten, was in schwierigen Montagesituationen hilfreich ist.

Wie nachstehend ausgeführt ist, lassen sich mit Hilfe der Federeinrichtung eine Reihe von weiteren vorteilhaften technischen Effekten erzielen. Die diese technischen Effekte bewirkenden Merkmale sind jeweils für sich betrachtet unabhängig voneinander vorteilhaft und können beliebig miteinander kombiniert werden.

So kann gemäß einer vorteilhaften Ausgestaltung die Federeinrichtung um wenigstens eine Gewindesteigung, vorzugsweise um mehr als zwei Gewindesteigungen des Gewindesegments bzw. des Gewindes des Gewindesegments stauchbar sein. Insbesondere kann der Gesamtfederweg wenigstens einen, bevorzugt wenigstens zwei Gewindesteigungen des Gewindesegments betragen. Dadurch ist sichergestellt, dass unter Stauchung der Federeinrichtung der Gewindesperrbolzen mit wenigstens einer vollständigen Umdrehung angezogen werden kann.

Die Federeinrichtung kann insbesondere so dimensioniert und/oder ausgestaltet sein, dass, wenn sie gestaucht ist, ein Restfederweg verbleibt, der wenigstens einer halben oder einer ganzen Gewindesteigung des Gewindesegments entspricht. Um nicht zu viel anziehen zu müssen, kann der Restfederweg bei einer Stauchung per Hand höchstens ein bis zwei Gewindesteigungen des Gewindesegments betragen.

Der Restfederweg der Federeinrichtung ist gemäß einer weiteren Ausgestaltung aufgebraucht, wenn die Federeinrichtung sich durch eine Erhöhung der Klemmkraft oder des Anzugsmoments, mit dem der Gewindesperrbolzen angezogen wird, nicht weiter stauchbar ist. Beispielsweise ist der Restfederweg aufgebraucht, wenn alle sich im Kraftfluss der Klemmkraft befindlichen, gegenüber der Federeinrichtung starren Körper unmittelbar aufeinanderliegen. Ein weiteres Anziehen des Gewindesperrbolzens drückt bei dieser Ausgestaltung lediglich die aufeinanderliegenden Starrkörper zusammen. Diese Ausgestaltung hat den Vorteil, dass der aufgebrauchte Restfederweg anhand eines sprunghaften Anstieges des Anzugsmoments pro Anzugswinkel für einen Benutzer sofort zu erkennen ist.

Am Ende des Gesamtfederwegs und des Restfederwegs ist der Federweg der Federeinrichtung vollständig aufgebraucht. Dies muss nicht bedeuten, dass die Federeinrichtung an sich nicht weiter gestaucht werden könnte. Der Gesamt- oder Restfederweg ist dann aufgebraucht, wenn sich die in der Vorrichtung montierte Federeinrichtung in ihrer Einbaulage nicht weiter axial stauchen lässt. Am Anfang des Gesamtfederwegs befindet sich die Federeinrichtung in einer Ausgangsstellung, in der sich die Vorrichtung noch nicht in Kontakt mit dem Gegenstand, an dem sie befestigt werden soll, befindet. In der Ausgangsstellung kann die Federeinrichtung kraftfrei oder bereits vorgestaucht sein. Am Anfang des Restfederwegs ist die Federeinrichtung gegenüber dem Anfang des Gesamtfederwegs gestaucht.

Es ist ferner von Vorteil, wenn der Restfederweg solange nicht aufgebraucht ist, bis nicht ein vorbestimmtes Anzugsmoment erreicht ist. Das Erreichen des vorbestimmten Anzugsmoments ist bei dieser Ausgestaltung am sprunghaften Anstieg des Anzugsmoments pro Anzugswinkel zu erkennen.

Gemäß einer weiteren Ausgestaltung kann die Federeinrichtung so dimensioniert und/oder ausgestaltet sein, dass kein Restfederweg verbleibt, wenn der Gewindebolzen von Hand angezogen ist.

Gemäß einer weiteren vorteilhaften Ausgestaltung kann die Federeinrichtung in wenigstens einer Aussparung angeordnet sein. Eine Aussparung kann die Federeinrichtung genau positionieren und führen. Die wenigstens eine Aussparung kann in einer Fläche ausgebildet sein, die bei aufgebrauchtem Restfederweg auf einer Gegenfläche fest aufliegt.

Alternative oder kumulative Vorteile der wenigstens einen Aussparung ergeben sich im Übrigen aus den folgenden Ausführungen.

Die wenigstens eine Aussparung kann am Sockel, beispielsweise einer Auflagefläche des Sockels, ausgebildet sein. Die Auflagefläche des Sockels ist bevorzugt zur Auf- oder Anlage auf oder an dem Gegenstand, insbesondere einer zur Auflagefläche komplementären Gegenfläche des Gegenstandes ausgebildet. Im vollständig befestigten Zustand, beispielsweise wenn der Restfederweg aufgebraucht ist, liegt der Sockel mit der Auflagefläche am Gegenstand an. Liegt die Auflagefläche am Gegenstand an, so verläuft der Kraftfluss durch die Auflagefläche.

Die Fertigung der Aussparung in der Auflagefläche ist technisch einfach. Außerdem ist die Auflagefläche meist recht groß, so dass an dieser Stelle ausreichend Platz für die Federeinrichtung besteht. Bestehende Vorrichtungen können zudem leicht nachträglich mit einer solchen Aussparung versehen werden.

Im kraftfreien Zustand kann die Federeinrichtung aus der Auflagefläche in Richtung weg vom Sockel ragen. Wird bei einer solchen Ausgestaltung der Gewindebolzen in die Gewindeöffnung gesteckt, so kommt zunächst die Federeinrichtung zur Anlage an den Gegenstand. Erst unter Stauchung der Federeinrichtung und entsprechend höherem Kraftaufwand kann der Gewindebolzen tiefer in die Gewindeöffnung gesteckt werden. Die taktile Rückmeldung durch den bei Stauchung der Feder einsetzenden Kraftanstieg ermöglicht es einem Benutzer, die notwendige Einstecktiefe genauer zu bestimmen und erleichtert somit die Montage. Diese Ausgestaltung ist insbesondere sinnvoll, wenn sie mit der oben beschriebenen Ausgestaltung der Federeinrichtung kombiniert wird, bei der ein Restfederweg beim Einstecken des Gewindesperrbolzens verbleibt.

In dieser Ausgestaltung ist die Federeinrichtung also zumindest solange, wie die Vorrichtung nicht vollständig am Sockel befestigt ist, zwischen der Auflagefläche und dem Gegenstand angeordnet. Der Sockel ist bevorzugt dann vollständig am Gegenstand befestigt, wenn der Gewindesperrbolzen mit wenigstens dem vorgeschriebenen Anzugsmoment angezogen ist.

Gemäß einer weiteren Ausgestaltung kann der Gewindesperrbolzen einen Kopf aufweisen. Der Kraftfluss der Klemmkraft verläuft vom Kopf zum Sockel hin. Im vollständig montierten Zustand der Vorrichtung verläuft der Kraftfluss der Klemmkraft vom Kopf durch den Sockel über die Auflagefläche zum Gegenstand, auf dem die Vorrichtung angebracht ist.

Die Federeinrichtung kann sich gemäß einer vorteilhaften Ausgestaltung am Kopf des Gewindesperrbolzens abstützen.

Zumindest im kraftfreien Zustand kann zwischen dem Kopf des Gewindesperrbolzens und dem Sockel die Federeinrichtung angeordnet sein. Ist der Restfederweg aufgebraucht, kann der Kopf des Gewindesperrbolzens gemäß einer weiteren Ausgestaltung direkt auf dem Sockel aufliegen.

An der Unterseite des Kopfes des Gewindesperrbolzens und/oder an einer der Unterseite gegenüberliegenden Fläche des Sockels kann wenigstens eine die Federeinrichtung aufnehmende Aussparung ausgebildet sein. Der Vorteil einer solchen Anordnung besteht darin, dass der Kopf des Gewindesperrbolzens für den Bediener besser sichtbar und leichter zugänglich ist. Für den Bediener ist ein Spalt zwischen Kopf und Sockel einfacher zu erkennen. Ein solcher Spalt kann ein Hinweis auf eine nicht vollständige Befestigung des Sockels am Gegenstand sein, denn Kopf und Sockel liegen noch nicht unmittelbar aufeinander.

Der Sockel kann gemäß einer weiteren Ausgestaltung wenigstens eine Buchse aufweisen, durch die der Gewindesperrbolzenverläuft. Eine solche Buchse kann beispielsweise eine Lagerbuchse sein, die eine Drehung des Halteabschnitts um den Gewindesperrbolzen ermöglicht, so dass sich der Halteabschnitt selbständig an einer Lastrichtung ausrichten kann.

Die Buchse kann in einem Sockelkörper des Sockels aufgenommen sein. Am Sockelkörper befindet sich bevorzugt der Halteabschnitt.

Bei einer solchen Ausgestaltung weist der Sockel mit dem Sockelkörper einen relativ zum Gewindesperrbolzen drehbaren Teil, und mit der als Lagerbuchse ausgestalteten Buchse einen mit dem Gewindesperrbolzen stationären Teil auf. Der Sockelkörper ist um den Gewindesperrbolzen drehbar.

Die Auflagefläche des Sockels und/oder die Fläche des Sockels, auf der der Kopf des Gewindesperrbolzens zur Auflage kommt, sind bevorzugt von jeweils einem Flanschabschnitt einer Buchse gebildet.

In einer Ausgestaltung kann die Federeinrichtung zwischen einer Buchse und dem Sockelkörper angeordnet sein. Insbesondere kann die Buchse und/oder der Sockelkörper eine Aussparung aufweisen, in der die Federeinrichtung angeordnet ist. Im kraftfreien Zustand kann die Federeinrichtung aus der Aussparung in einen Zwischenraum zwischen Buchse und Sockelkörper ragen. Ist der Restfederweg aufgebraucht, so können Buchse und Sockelkörper unmittelbar aufeinanderliegen.

Gemäß einer weiteren Ausgestaltung können entlang des Kraftflusses der Klemmkraft auch mehrere Federeinrichtungen in Reihe geschaltet sein. So kann beispielsweise eine Federeinrichtung sich unter dem Kopf des Gewindesperrbolzens und eine weitere Federeinrichtung sich an der Auflagefläche befinden. Ebenso ist eine Kombination mit einer Federeinrichtung zwischen Buchse und Sockelkörper möglich.

Gemäß einem weiteren Aspekt kann im nicht montierten und/oder im nicht vollständig oder bestimmungsgemäß montierten Zustand die Federeinrichtung aus der Aussparung ragen. Beispielsweise kann sich die Federeinrichtung bei am Sockel angeordneter Aussparung in Richtung des Kopfes des Gewindesperrbolzens erstrecken, wenn sich die Aussparung unterhalb des Gewindesperrbolzens befindet. Befindet sich die Aussparung an der Auflagefläche, so kann die Federeinrichtung in Richtung weg von der Auflagefläche aus der Aussparung ragen.

Die Federeinrichtung kann aus der Aussparung ragen, solange der Gewindesperrbolzen mit weniger als einem vorbestimmten Anzugsmoment, dies ist beispielsweise das vorgeschriebene Anzugsmoment, angezogen ist und/oder solange weniger als eine vorbestimmte Klemmkraft vorliegt.

Die Federeinrichtung in einer der obigen Ausgestaltungen ermöglicht es in einer weiteren vorteilhaften Ausführung zudem, auf einfache Weise die vollständige und bestimmungsgemäße Befestigung der Vorrichtung am Gegenstand zu überprüfen.

Beispielsweise kann der Halteabschnitt einen am Sockel schwenkbar gehaltenen bügel- oder augenförmigen Aufbau aufweisen. Der Aufbau kann insbesondere zur Anbringung eines Anschlag-, Halte- oder Zurrmittels ausgestaltet sein.

In diesem Zusammenhang kann es vorteilhaft sein, wenn die Schwenkbewegung des Aufbaus eingeschränkt ist, solange die Federeinrichtung um weniger als einen vorbestimmten Betrag axial gestaucht ist. Insbesondere kann ein mit der Federeinrichtung mechanisch verbundener Anschlag in die Schwenkbewegung des Aufbaus bewegt sein, wenn die Federeinrichtung um weniger als um einen vorbestimmten Betrag axial gestaucht ist. Ist der Anschlag in die Schwenkbewegung des Aufbaus bewegt, so blockiert er diese.

Der Anschlag kann aus der Schwenkbewegung des Aufbaus bewegt sein, wenn die Federeinrichtung um wenigstens den vorbestimmten Betrag axial gestaucht ist. Dies kann beispielsweise dann der Fall sein, wenn der Restfederweg der Federeinrichtung aufgebraucht ist. Ist der Anschlag aus der Schwenkbewegung bewegt, so blockiert er diese nicht mehr und die Schwenkbewegung ist nicht mehr eingeschränkt. Die Schwenkbewegung ist nicht mehr über einen eingeschränkten, sondern den maximal möglichen Bereich ausführbar. Die Schwenkbewegung bei um weniger als den vorbestimmten Betrag axial gestauchter Federeinrichtung kann in einer Ausgestaltung also geringer sein als bei um wenigstens den vorbestimmten Betrag axial gestauchter Federeinrichtung.

Der in die Schwenkbewegung des Aufbaus bewegliche Anschlag kann insbesondere der Kopf des Gewindesperrbolzens oder ein Teil des Kopfes sein.

In den obigen Ausgestaltungen dient die Schwenkbewegung des Aufbaus als klarer und einfacher Indikator für eine vollständige Befestigung der Vorrichtung am Gegenstand. Solange der Anschlag in die Schwenkbewegung des Aufbaus bewegt ist, die Schwenkbewegung also eingeschränkt ist, ist die Vorrichtung nicht vollständig befestigt.

Die Federeinrichtung kann gemäß einer weiteren Ausgestaltung um den vorbestimmten Betrag gestaucht sein, wenn sie vollständig in der Aussparung aufgenommen ist bzw. nicht aus der Aussparung ragt. In anderer Ausgestaltung ist die Federeinrichtung um den vorbestimmten Betrag gestaucht, wenn sie noch aus der Aussparung ragt.

Die Federeinrichtung und/oder die Aussparung ist bevorzugt um den Gewindesperrbolzen herum angeordnet, so dass die von der Federeinrichtung erzeugte Kraft möglichst gleichmäßig entlang der Umfangsrichtung bzw. um die Axialrichtung herum erzeugt wird. In einer Ausgestaltung kann die Federeinrichtung den Gewindesperrbolzen umgeben. Hierzu kann die Federeinrichtung ein ringförmiges Federelement und/oder mehrere um den Gewindesperrbolzen bevorzugt gleichmäßig beabstandet angeordnete Federelemente aufweisen.

Die Federeinrichtung umfasst in einer vorteilhaften Ausgestaltung wenigstens ein Federelement aus der Gruppe enthaltend eine Wellenfeder, eine Ringfeder, einen Federring, eine Elastomerfeder, eine gummi-elastische Feder, eine Schraubenfeder und eine Stauchhülse, wobei diese Auflistung nicht als abschließend anzusehen ist.

Ein weiterer Vorteil, der sich aus dem Einsatz der Federeinrichtung ergibt, ist, dass Markierungen vorgesehen sein können, die abhängig von der Stauchung der Federeinrichtung sichtbar bzw. nicht sichtbar sind.

So kann in einer vorteilhaften Ausgestaltung die Vorrichtung wenigstens eine optische Warnmarkierung aufweisen, die sichtbar ist, solange die Federeinrichtung um weniger als einen vorbestimmten Betrag gestaucht ist. Die optische Warnmarkierung dient insbesondere dazu, eine unvollständige Befestigung der Vorrichtung am Gegenstand anzuzeigen.

Der vorbestimmte Betrag der axialen Stauchung der Federeinrichtung, während der die optische Warnmarkierung sichtbar ist, kann dem Betrag der Stauchung entsprechen, bei der die Schwenkbewegung wie oben beschrieben eingeschränkt ist. Der vorbestimmte Betrag der axialen Stauchung kann einem Betrag entsprechen, bei dem der Restfederweg aufgebraucht ist.

Bevorzugt ist die optische Warnmarkierung nicht sichtbar, wenn die Federeinrichtung um wenigstens den vorbestimmten Betrag gestaucht ist. Beispielsweise kann die Warnmarkierung durch den Kopf des Gewindesperrbolzens oder ein anderes Element des Sockels verdeckt sein, wenn der vorbestimmte Betrag der Stauchung erreicht ist. Die Warnmarkierung kann am Sockel angeordnet sein, beispielsweise zwischen dem Kopf des Gewindesperrbolzens und dem Sockel und/oder an der Auflagefläche. Die Warnmarkierung kann beispielsweise eine Vertiefung oder eine Erhebung auf einer Fläche aufweisen, die farblich gegenüber ihrer Umgebung hervorgehoben sein kann.

Alternativ oder kumulativ kann die Vorrichtung eine optische Bereitschaftsmarkierung aufweisen, die erst sichtbar ist, wenn die Federeinrichtung um wenigstens einen vorbestimmten Betrag gestaucht ist. Der vorbestimmte Betrag kann erreicht sein, wenn der Restfederweg der Federeinrichtung aufgebraucht ist.

Die optische Bereitschaftsmarkierung kann dazu dienen, die vollständige und bestimmungsgemäße Befestigung der Vorrichtung am Gegenstand anzuzeigen.

Der vorbestimmte Betrag der axialen Stauchung der Federeinrichtung, während der die optische Bereitschaftsmarkierung sichtbar ist, kann dem vorbestimmten Betrag der Stauchung, bei der die Schwenkbewegung eingeschränkt ist, entsprechen.

Die optische Bereitschaftsmarkierung kann am Sockel, beispielsweise zwischen dem Kopf des Gewindesperrbolzens und dem Sockel und/oder an der Auflagefläche angeordnet sein. Die Bereitschaftsmarkierung kann auch durch eine Quetschung eines Elements erzeugt sein, das in einen von außerhalb der Vorrichtung sichtbaren Bereich gequetscht wird, wenn die Federeinrichtung um wenigstens den vorbestimmten Betrag gestaucht ist.

Die optische Bereitschaftsmarkierung ist bevorzugt nicht sichtbar, wenn die Federeinrichtung um weniger als den vorbestimmten Betrag gestaucht ist.

Die Handhabung lässt sich ferner dadurch erleichtern, dass die Bereitschaftsmarkierung und die Warnmarkierung jeweils nur wechselseitig sichtbar sind. Beispielsweise kann die Bereitschaftsmarkierung nur dann sichtbar sein, wenn die Warnmarkierung nicht sichtbar ist. Wenn die Warnmarkierung sichtbar ist, ist die Bereitschaftsmarkierung vorteilhaft nicht sichtbar. Der Ausdruck "nicht sichtbar" bedeutet dabei, dass bei am Gegenstand angebrachter, aber nicht notwendigerweise vollständig befestigter Vorrichtung kein Standpunkt außerhalb der Vorrichtung vorhanden ist, von dem aus die Bereitschaftsmarkierung bzw. die Warnmarkierung sichtbar ist. Der Ausdruck "sichtbar" dagegen bedeutet, dass außerhalb der Vorrichtung bei am Gegenstand angebrachter Vorrichtung eine Vielzahl von Positionen vorhanden ist, von denen aus die Bereitschaftsmarkierung bzw. die Warnmarkierung sichtbar ist.

Sowohl Bereitschaftsmarkierung als auch Warnmarkierung können jeweils eine Vielzahl von Einzelmarkierungen aufweisen.

Im Folgenden ist die Erfindung anhand von Ausführungsbeispielen mit Bezug auf die beigefügten Zeichnungen exemplarisch beschrieben. Dabei können nach Maßgabe der obigen Ausführungen Merkmale eines Ausführungsbeispiels weggelassen werden, sofern es bei einer speziellen Anwendung nicht auf den mit diesem Merkmal verbundenen technischen Effekt ankommt. Ebenso können in einem nachstehend beschriebenen und dargestellten Ausführungsbeispiel weitere oben beschriebene Merkmale hinzugefügt werden, wenn es auf die mit diesen Merkmalen verknüpften technischen Effekte bei einer Anwendung ankommen sollte.

Im Folgenden werden für Elemente, die einander hinsichtlich Funktion und/oder Aufbau entsprechen, dieselben Bezugszeichen verwendet.

Es zeigen:
- Fig. 1: eine schematische Ansicht eines ersten Ausführungsbeispiels einer Vorrichtung zum Anschlagen, Heben oder Zurren;
- Fig. 2: eine schematische Darstellung eines Details der Fig. 1;
- Fig. 3: eine schematische Darstellung eines weiteren Ausführungsbeispiels einer Vorrichtung zum Anschlagen, Heben oder Zurren;
- Fig. 4: eine schematische Darstellung eines weiteren Ausführungsbeispiels einer Vorrichtung zum Anschlagen, Heben oder Zurren;
- Fig. 5: eine weitere schematische Ansicht einer Vorrichtung zum Anschlagen, Heben oder Zurren;
- Fig. 6A: eine schematische Schnittansicht eines Gewindesperrbolzens und einer optischen Bereitschaftsmarkierung in einem ersten Zustand;
- Fig. 6B: eine schematische Schnittdarstellung des Gewindesperrbolzens und der Bereitschaftsmarkierung der Fig. 6A in einem zweiten Zustand;
- Fig. 6C: eine schematische Darstellung der Ansicht C-C der Fig. 6B;
- Fig. 7A: eine schematische Darstellung eines ersten Zustands im Zuge einer Montage der Vorrichtung an einem Gegenstand;
- Fig. 7B: eine schematische Darstellung eines zweiten Zustands im Zuge einer Montage der Vorrichtung der Fig. 7A;
- Fig. 7C: eine schematische Darstellung eines dritten Zustandes im Zuge einer Montage der Vorrichtung der Fig. 7A;
- Fig. 7D: eine schematische Darstellung eines vierten Zustandes im Zuge einer Montage der Vorrichtung der Fig. 7A.

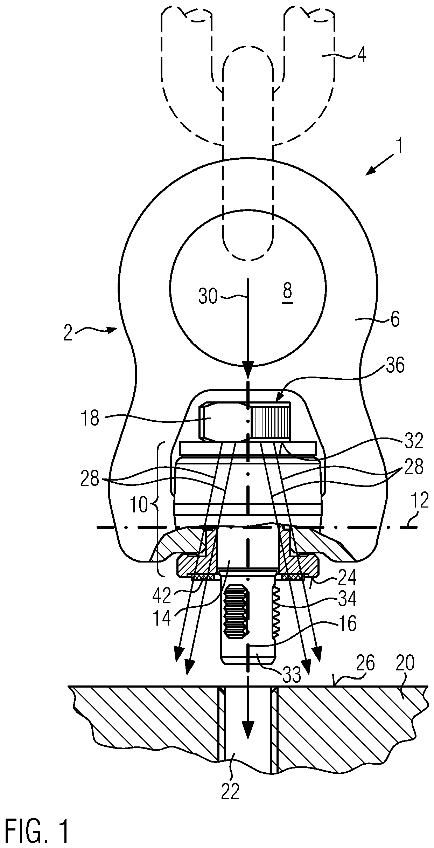

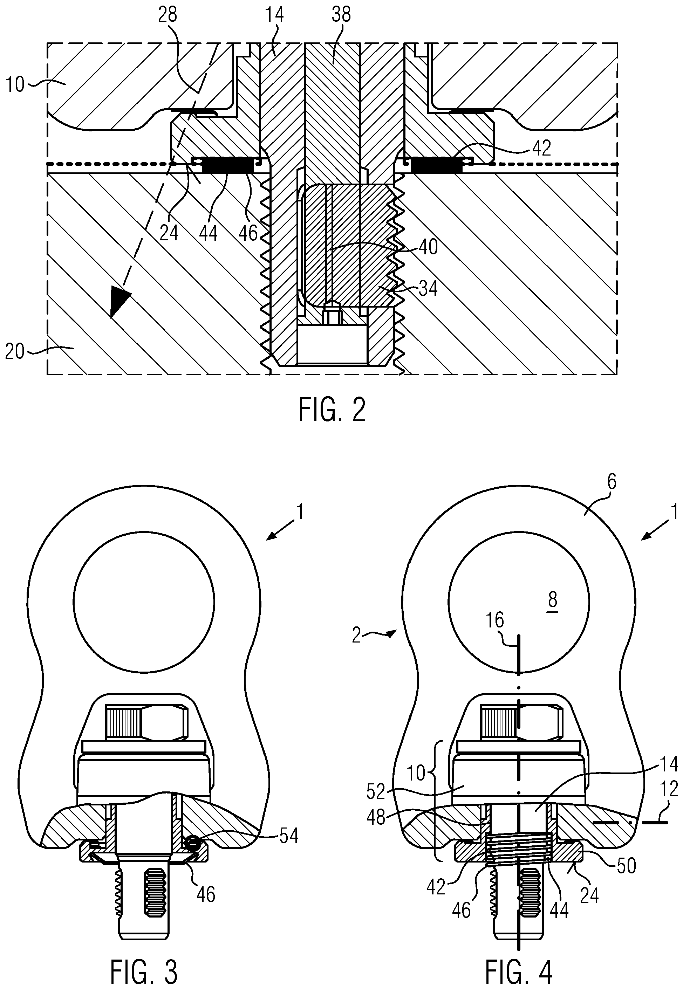

Zunächst werden anhand der Fig. 1 und 2 Aufbau und Funktion einer Vorrichtung 1 beschrieben, die zum Anschlagen, Heben und Zurren von Lasten oder Gegenständen (nicht gezeigt) dient.

Die Vorrichtung 1 weist einen Halteabschnitt 2 auf, an dem ein Anschlag-, Hebe- oder Zurrmittel 4, beispielsweise eine Kette, ein Gurt oder ein Seil befestigt werden kann. Am anderen Ende des Anschlag-, Hebe- oder Zurrmittels 4 kann eine Last, ein festzuzurrender Gegenstand oder eine ähnliche Vorrichtung (nicht dargestellt) befestigt sein.

Der Halteabschnitt 2 kann insbesondere einen bügel- oder augenförmigen Aufbau 6 aufweisen. Zum Anbringen des Anschlag-, Hebe- oder Zurrmittels 4 kann der Halteabschnitt 2 ein Auge oder eine Öse 8 aufweisen.

Die Vorrichtung 1 weist ferner einen Sockel 10 auf, an dem sich der Halteabschnitt 2 befindet. Der Aufbau 6 kann um eine Schwenkachse 12 schwenkbar am Sockel 10 befestigt sein.

Ein Gewindesperrbolzen 14 erstreckt sich in einer Axialrichtung 16 wenigstens abschnittsweise durch den Sockel 10. Bevorzugt durchsetzt der Gewindesperrbolzen 14 den Sockel 10 vollständig. Ebenfalls bevorzugt weist der Gewindesperrbolzen 14 einen Kopf 18 auf.

Mithilfe des Gewindesperrbolzens 14 ist die Vorrichtung 1, insbesondere der Sockel 10 an einem Gegenstand 20, der in Fig. 1 nur schematisch dargestellt ist, befestigbar. Hierzu ist der Gegenstand 20 mit einer zum Gewindesperrbolzen 14 komplementären Gewindeöffnung 22 versehen, die sich entlang der Axialrichtung 16 in den Gegenstand 20 erstreckt. Die Axialrichtung 16 verläuft bevorzugt senkrecht zur Schwenkachse 12. Der Gewindesperrbolzen 14 und die Gewindeöffnung 22 sind mit zueinander komplementären Gewinden versehen.

Der Sockel 10 weist eine Auflagefläche 24 auf, die bei am Gegenstand 20 vollständig und damit sach- und bestimmungsgemäß montierter Vorrichtung an einer entsprechenden Gegenfläche 26 des Gegenstandes 20 aufliegt. Durch Anziehen des in die Gewindeöffnung 22 eingesetzten Gewindesperrbolzens 14 wird der Sockel 10 zwischen dem Gewindesperrbolzen 14, insbesondere dessen Kopf 18, und dem Gegenstand 20 geklemmt. Wie bei jeder Schraubverbindung ist ein Kraftfluss 28 der Klemmkraft 30 ausgehend vom Gewindesperrbolzen 14 bzw. von einer Unterseite 32 des Kopfes 18 durch den Sockel 10 und die Auflagefläche 24 zum Gegenstand 20 gerichtet.

Der Gewindesperrbolzen 14 weist im Bereich seines Schaftes 33 ein radial bewegliches Gewindesegment 34 oder mehrere radial bewegliche Gewindesegmente 34 auf. Bis auf die Gewindesegmente 34 ist der Schaft 33 bevorzugt gewindefrei ausgestaltet. Das wenigstens eine Gewindesegment 34 weist ein zum Gewinde der Gewindeöffnung 22 komplementäres Gewinde auf. Über eine hier nicht gezeigte Mechanik kann das wenigstens eine Gewindesegment 34 radial ein- und ausgefahren werden. Beispielsweise kann der Kopf 18 auf seiner Oberseite mit einem Knopf 36 versehen sein, der über einen in seiner Längsrichtung beweglichen Stößel 38 und eine Kulissenführung 40 das wenigstens eine Gewindesegment 34 in radialer Richtung ein- oder ausfahren kann. Bezüglich Funktion und Aufbau des Gewindesperrbolzens 14 wird im Übrigen auf die DE 20 2019 106 029 U1 verwiesen.

Der Gewindesperrbolzen 14 erlaubt eine einfache und schnelle Montage. Er wird mit eingefahrenem Gewindesegment 34 in Axialrichtung 16 einfach in die Gewindeöffnung 22 gesteckt. Anschließend wird der Knopf 36 betätigt oder losgelassen, so dass die Gewindesegmente 34 des Gewindesperrbolzens 14 radial ausfahren und mit der Gewindeöffnung 22 in Eingriff gelangen. Anschließend sollte der Gewindesperrbolzen 14 von Hand angezogen werden. Dabei können sich jedoch wie eingangs geschildert, Probleme ergeben.

Um diese Probleme zu vermeiden ist die Vorrichtung 1 mit einer Federeinrichtung 42 versehen, die im Kraftfluss 28 der Klemmkraft 30 angeordnet ist.

Bei der Ausführungsform der Fig. 1 und 2 stützt sich die Federeinrichtung 42 im montierten Zustand der Vorrichtung 1 zwischen dem Sockel 10 und dem Gegenstand 20 ab. Hierzu befindet sich die Federeinrichtung 42 beispielsweise an oder in der Auflagefläche 24 des Sockels 10. Im unbelasteten Zustand ragt die Federeinrichtung 42 aus der Auflagefläche 24. Die Auflagefläche 24 kann eine den Gewindesperrbolzen 14 ringförmig umgebende Aussparung bzw. Vertiefung 44 aufweisen, in der die Federeinrichtung 42 aufgenommen ist.

Wird nun der Gewindesperrbolzen 14 mit eingefahrenen Gewindesegmenten 34 in die Gewindeöffnung 22 eingesetzt, so gelangt zunächst die aus der Aussparung 44 ragende Federeinrichtung 42 in Kontakt mit dem Gegenstand 20 bzw. dessen Gegenfläche 26. Es muss nun zunehmend mehr Kraft aufgewendet werden, um den Gewindesperrbolzen 14 unter weiterer axialer Stauchung der Federeinrichtung 42 tiefer in die Gewindeöffnung 22 zu drücken. Sobald dieser Anstieg der Kraft festgestellt wird, kann der Knopf 36 betätigt oder losgelassen werden, so dass die Gewindesegmente 34 in radialer Richtung ausfahren und in einen mehr oder weniger vollständigen Eingriff mit der Gewindeöffnung 22 gelangen. Bevorzugt ist die Federeinrichtung 42 so ausgestaltet, dass ein Restfederweg von wenigstens einer Gewindesteigung des Gewindes von Gewindesegment 34 und Gewindeöffnung 22 verbleibt, um den Gewindesperrbolzen 14 in die Gewindeöffnung 22 zu drücken.

Der Gewindesperrbolzen 14 ist bei dieser Ausführung drehbar im Sockel 10 aufgenommen, so dass anschließend der Gewindesperrbolzen 14 bis zum vorgeschriebenen Anzugsmoment angezogen werden kann, bis der Restfederweg aufgebraucht ist. Beträgt der Restfederweg eine Gewindesteigung, so steht zum Anziehen des Gewindesperrbolzens 14 noch eine volle Umdrehung zur Verfügung. Die Federeinrichtung 42 ist bevorzugt so ausgestaltet, dass der Restfederweg aufgebraucht ist, wenn das vorgeschriebene Anzugsmoment erreicht ist, also die für den sach- und bestimmungsgemäßen Betrieb notwendige Klemmkraft 30 erreicht ist. Der Gesamtfederweg der Federeinrichtung 42 beträgt bevorzugt wenigstens zwei Gewindesteigungen. Ein Gesamtfederweg von mehr als fünf Millimeter dürfte in den seltensten Fällen notwendig sein.

Wenn das vorgeschriebene Anzugsmoment erreicht ist, ist die Federeinrichtung 42 bevorzugt vollständig in der Aussparung 44 aufgenommen bzw. in die Aussparung 44 zurückgedrückt. Der Sockel 10 und der Gegenstand 20 liegen dann unmittelbar aufeinander. Der Kraftfluss 28 geht größtenteils durch die Flächen 24, 26 und nur noch zu einem geringen Teil durch die Federeinrichtung 42. Ist keine Aussparung 44 vorgesehen oder ragt die Federeinrichtung 42 am Ende ihres Gesamtfederweges noch aus der Aussparung 44, dann verläuft der Kraftfluss 28 nach wie vor durch die Federeinrichtung 42.

Die Federeinrichtung 42 ist bevorzugt um den Gewindesperrbolzen 14 herum angeordnet bzw. kann diesen ringförmig umgeben. Die Federeinrichtung 42 kann eine oder mehrere Federelemente 46 aufweisen, die ring- oder hülsenförmig ausgestaltet sein können.

In Fig. 1 und 2 weist die Federeinrichtung 42 beispielsweise als Federelement 46 eine Elastomerfeder oder eine Gummifeder bzw. eine Feder aus einem gummielastischen Material auf. Ein solches Federelement 46 ist zwar kein Dichtring, erfüllt aber hier eine Doppelfunktion als Dichtung. Es kann auch eine flache Schraubenfeder verwendet werden.

Bei der Vorrichtung 1 der Fig. 3 ist das Federelement 46 eine Tellerfeder. Ansonsten ist die Vorrichtung 1 der Fig. 3 identisch zur Vorrichtung 1 der Figuren 1 und 2.

Bei der Vorrichtung 1 der Fig. 4 ist das Federelement 46 eine Schraubenfeder, durch die hindurch sich der Gewindesperrbolzen 14 erstreckt. Die Aussparung 44 ist von einem in radialer Richtung erweiterten Bereich einer sich durch den Sockel 10 erstreckenden Durchgangsöffnung 48 gebildet, in der der Gewindesperrbolzen 14 aufgenommen ist. Die Aussparung 44 öffnet sich zur Auflagefläche 24 hin und bildet an ihrem entgegengesetzten Ende eine Schulter zur Auflage des Federelements 46 aus. Wie bei den Ausführungsformen der Fig. 1 bis 3 stützt sich auch bei der Ausführungsform der Fig. 4 das Federelement 46 im montierten Zustand zwischen dem Gegenstand 20 und dem Sockel 10 ab.

Die Auflagefläche 24 ist bei der Ausgestaltung der Fig. 4 aufgrund der anderen Ausgestaltung der Aussparung 44 größer als die Auflagefläche 24 der Ausführungsformen der Fig. 1 und 3, was für einige Anwendungen von Vorteil sein kann, denn es wird eine geringere Flächenpressung auf den Gegenstand 20 ausgeübt.

Bei den Ausführungsformen der Figuren 1 bis 4 ist die Auflagefläche 24 lediglich beispielhaft von einer Buchse 50 gebildet.

Die Buchse 50 kann als Lagerbuchse 50 Teil eines Gleit- und/oder Wälzlagers sein, so dass der Halteabschnitt 2 mit möglichst wenig Reibung und Verschleiß um den Gewindesperrbolzen 14 bzw. die Axialrichtung 16 herum drehbar ist. Zusammen mit der optionalen Schwenkbewegung des Aufbaus 6 um die Schwenkachse 12 ermöglicht dies ein Ausrichten des Auges 8 bzw. des Halteabschnitts 2 in Richtung der vom Anschlag-, Hebe- oder Zurrmittel 4 ausgeübten Kraft. Die Buchse 50 ist drehbar in einem Sockelkörper 52 des Sockels 10 angeordnet und weist einen flanschförmigen, bevorzugt die Auflagefläche 24 bildenden Bereich und einen die Durchgangsöffnung 48 im Sockelkörper 52 auskleidenden Bereich auf. Die Buchse 50 ist gegenüber dem Sockelkörper 52 drehbar und gegenüber dem Gegenstand 20 stationär.

Eine solche Buchse 50 ist jedoch lediglich optional. Die Auflagefläche 24 kann auch direkt vom Sockelkörper 52 des Sockels gebildet sein.

Alternativ kann die Federeinrichtung 42 auch zwischen einer Buchse 50 und einem Sockelkörper 52 des Sockels 10 angeordnet sein, beispielsweise an der in Fig. 3 mit dem Bezugszeichen 54 versehenen Stelle.

Die Federeinrichtung 42 kann auch im Kraftfluss 28 zwischen dem Kopf 18 und der Auflagefläche 24 angeordnet sein.

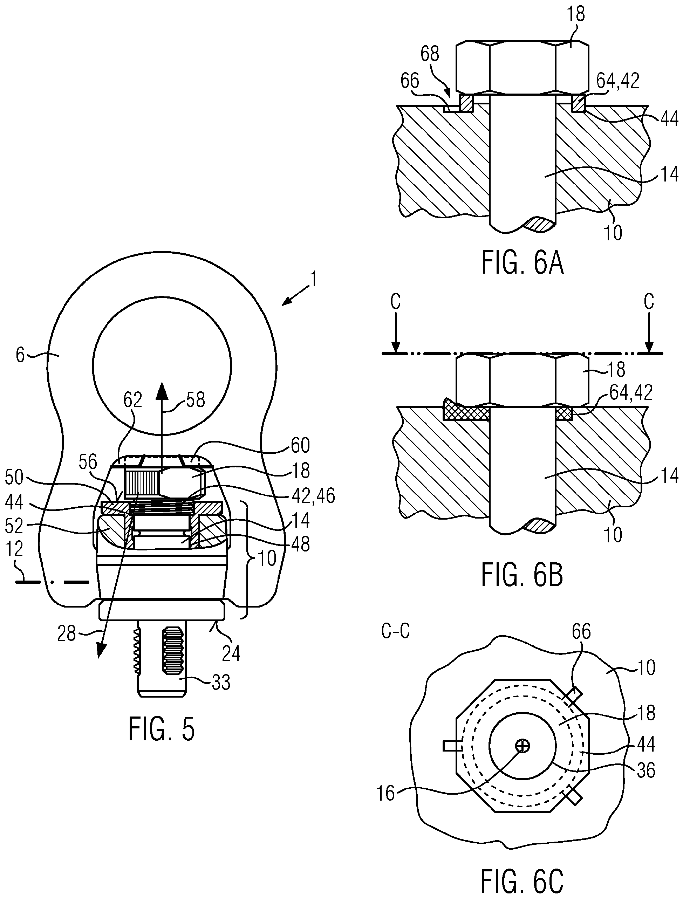

So kann sich, wie das Ausführungsbeispiel der Fig. 5 zeigt, alternativ oder kumulativ zu einer Anordnung der Federeinrichtung 42 an der Auflagefläche 24 die Federeinrichtung 42 auch unter dem Kopf 18 befinden bzw. sich am Kopf 18 abstützen. Auch bei dieser Ausgestaltung ist bevorzugt eine Aussparung 44 vorhanden, in der die Federeinrichtung 42 aufgenommen ist. Diese Aussparung 44 öffnet sich bei der Ausführungsform der Fig. 5 zum Kopf hin.

Solange eine vorbestimmte Klemmkraft 30 nicht überschritten ist, ragt die Federeinrichtung 42 in Richtung des Kopfes 18 aus der Aussparung 44. Ist die vorbestimmte Klemmkraft 30 erreicht, so ist der Gesamtfederweg der Federeinrichtung 42 aufgebraucht und der Kopf 18 liegt auf einer Kopfauflagefläche 56 des Sockels 10 auf. Die Kopfauflagefläche 56 kann von einer Buchse bzw. Lagerbuchse 50 bzw. deren flanschförmigen Abschnitt gebildet sein.

Im Ausführungsbeispiel der Fig. 5 ist ähnlich wie beim Ausführungsbeispiel der Fig. 4 eine Schraubenfeder als Federelement 46 verwendet, durch die sich der Gewindesperrbolzen 14 erstreckt und die in die Durchgangsöffnung 48 bzw. eine radiale Erweiterung der Durchgangsöffnung 48 eingesetzt ist. Selbstverständlich können auch andere Arten von Federelementen 46 zum Einsatz kommen. So können unter entsprechender Anpassung der Form der Aussparung 44 auch die in den Fig. 1 bis 3 gezeigten Federelemente 46 unter dem Kopf 18 verwendet werden. Insofern kann auf die Ausführungen oben zu den Figuren 1 bis 3 verwiesen werden, wobei die Kopfauflagefläche 56 an die Stelle der Auflagefläche 24 tritt.

Auch bei der Fig. 5 ist die Buchse 50 ein lediglich optionales Element. Die Kopfauflagefläche 56 kann auch vom Sockelkörper 52 gebildet sein.

In Fig. 5 ist gestrichelt dargestellt, dass aufgrund der von der Federeinrichtung 42 erzeugten Federkraft 58 der Kopf 18 vom Sockel 10 weggedrückt ist, solange eine vorbestimmte Klemmkraft 30 noch nicht erreicht und die Federeinrichtung 42 entsprechend gestaucht ist. Solange folglich die Vorrichtung 1 nicht vorschriftsgemäß am Gegenstand 20 montiert ist, ist der Kopf 18 vom Sockel 10 bzw. der Kopfauflagefläche 56 beabstandet.

Der durch die Federeinrichtung 42 vom Sockel 10 weggedrückte Kopf 18 schränkt die Schwenkbewegung des Aufbaus 6 um die Schwenkachse 12 ein, solange die Federeinrichtung 42 um weniger als einen vorbestimmten Betrag gestaucht ist. Der Kopf 18 bildet einen Anschlag 60, der in den vom Aufbau 6 im Zuge der Schwenkbewegung überstrichenen Bereich hineinragt und mit dem Aufbau kollidiert, solange die Federeinrichtung 42 nicht um einen vorbestimmten Betrag in axialer Richtung gestaucht ist.

Im dargestellten Ausführungsbeispiel weist der Aufbau 6 beispielsweise einen oder mehrere insbesondere laschenförmige Vorsprünge 62 auf, die so bemessen sind, dass sie bei vollständig montierter Vorrichtung 1, wenn also wenigstens eine vorbestimmte Klemmkraft 30 durch den Gewindesperrbolzen 14 erzeugt ist und die Federeinrichtung 42 um wenigstens den vorbestimmten Betrag axial gestaucht ist, den Kopf 18 gerade passieren können. In diesem Fall ist die Schwenkbewegung nicht mehr eingeschränkt. Der Aufbau 6 lässt sich folglich nur dann vollständig schwenken, wenn die Vorrichtung 1 sachgemäß am Gegenstand 20 montiert ist, also die mindestens erforderliche Klemmkraft 30 aufgebracht ist.

Bevorzugt ist die Federeinrichtung 42 dann um den vorbestimmten Betrag gestaucht, wenn der Gesamtfederweg 74 aufgebraucht ist.

Mit Hilfe der Federeinrichtung 42 lassen sich auch optische Anzeigen einrichten, die einen Benutzer auf das Erreichen und/oder Nichterreichen der mindestens erforderlichen Klemmkraft 30 hinweisen. Dies ist im Folgenden mit Bezug auf die Fig. 6A bis 6B erläutert.

In Fig. 6A ist der Gewindesperrbolzen 14 gezeigt, bevor eine vorbestimmte Klemmkraft 30 aufgebracht ist, also die Federeinrichtung 42 um einen vorbestimmten Betrag axial gestaucht ist.

Der Kopf 18 des Gewindesperrbolzens 14 ist vom Sockel 10 beabstandet. Alternativ kann die Federeinrichtung 42 auch an anderer Stelle, beispielsweise an der Auflagefläche 24 (Fig. 1) angeordnet sein, wobei die nachfolgenden Ausführungen entsprechend gelten.

Unter dem Kopf 18 befindet sich bei dieser Ausgestaltung eine optische Bereitschaftsmarkierung 64 in Form eines elastisch und/oder plastisch deformierbaren Materials, beispielsweise einem fließfähigen Kunststoff wie ein Elastomer. Die Bereitschaftsmarkierung 64 kann gleichzeitig Teil der Federeinrichtung 42 sein, indem der Kunststoff gleichzeitig als Federelement 46 dient.

Mit zunehmender Klemmkraft 30 wird die Federeinrichtung 42 axial gestaucht und der Kopf 18 näher an den Sockel 10 bewegt, bis er, wie in Fig. 6B gezeigt ist, auf der Kopfauflagefläche 56 aufliegt, dabei wird die Bereitschaftsmarkierung 64 zunehmend gequetscht. Bei auf dem Sockel 10 aufliegendem Kopf 18 ist die Bereitschaftsmarkierung 64 in Axialrichtung 16 maximal gequetscht.

Die Aussparung 44 kann kanal- oder nutenförmige Erweiterungen 66 aufweisen, die sich jenseits der Kopfauflagefläche 56 erstrecken. Dies ist in Fig. 6C zu erkennen, in der lediglich beispielhaft drei um die Axialrichtung 16 gleich verteilte, nutenförmige Erweiterungen 66 gezeigt sind. Liegt der Kopf 18 vollständig am Sockel 10 an, so wird die Bereitschaftsmarkierung 64 in die Erweiterungen 66 gedrückt und ist für einen Benutzer von mehreren Standpunkten relativ zur Vorrichtung 1 aus sichtbar.

Die Bereitschaftsmarkierung 64 weist bevorzugt eine visuell auffällige Farbe auf, beispielsweise Neongrün. Solange der Kopf 18 nicht auf dem Sockel 10 aufliegt, ist die Bereitschaftsmarkierung 64 nicht zu erkennen. Der Kopf 18 liegt erst dann auf dem Sockel 10 auf, wenn die Federeinrichtung 42 um einen vorbestimmten Betrag gestaucht ist, also eine vorbestimmte Klemmkraft 30 vom Gewindesperrbolzen 14 aufgebracht ist. Somit ist die Bereitschaftsmarkierung 64 erst sichtbar, wenn die vorbestimmte Klemmkraft 30 erreicht ist. Dies ist beispielsweise, wie oben bereits ausgeführt ist, dann der Fall, wenn der Gewindesperrbolzen 14 von Hand angezogen ist.

Das Volumen der Bereitschaftsmarkierung 64 und der Aussparung 44 kann so bemessen sein, dass die Bereitschaftsmarkierung 64 unterhalb des Kopfes 18 erst bei vollständiger Auflage des Kopfes 18 auf dem Sockel 10 sichtbar ist.

Selbstverständlich sind auch andere Ausgestaltungen einer Bereitschaftsmarkierung 64 möglich.

Anstelle der oder zusätzlich zur optischen Bereitschaftsmarkierung 64, wie sie beispielhaft in den Figuren 6A bis 6C gezeigt ist, kann eine optische Warnmarkierung 68 vorhanden sein. Beispielsweise kann die Erweiterung 66 an ihrem Grund mit einer visuell auffälligen Farbe versehen sein. Diese Farbe ist solange sichtbar, bis sie von der in die Erweiterung 66 gequetschten Bereitschaftsmarkierung 64 überdeckt ist. Solange also zumindest ein Teil der Warnmarkierung 68 sichtbar ist, ist die vorbestimmte Klemmkraft 30 noch nicht erreicht.

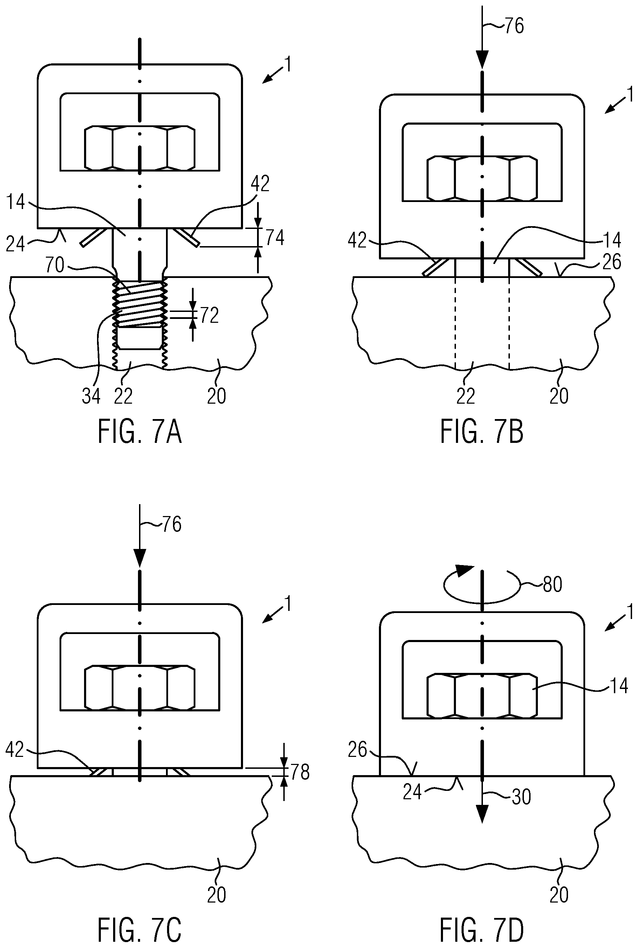

Anhand der Fig. 7A bis 7C ist im Folgenden beispielhaft eine Montage der Vorrichtung 1 an einem Gegenstand 20 erläutert.

Zunächst wird der Gewindesperrbolzen 14 mit eingefahrenem Gewindesegment 34 in die Gewindeöffnung 22 eingeführt (Fig. 7A). Das Gewindesegment 34 bzw. das Gewinde 70 des Gewindesegments 34 weist eine Steigung 72 auf. Die Federeinrichtung 42, die hier lediglich zur Erläuterung der Auflagefläche 24 angeordnet dargestellt ist, ist entspannt. Es steht der Gesamtfederweg 74 zur Verfügung.

Wird der Gewindesperrbolzen 14 weiter in die Gewindeöffnung 22 eingeführt, so kommt die Federeinrichtung 42 irgendwann zur Anlage an der Gegenfläche 26 des Gegenstandes 20 (Fig. 7B). Ab diesem Zeitpunkt muss mit zunehmender Einstecktiefe des Gewindesperrbolzens 14 in die Gewindeöffnung 22 eine größere Einsteckkraft 76 aufgebracht werden.

Wirkt eine vorbestimmte Einsteckkraft 76 (Fig. 7C), so ist die Federeinrichtung 42 um einen vorbestimmten Betrag gestaucht. Es steht noch ein Restfederweg 78 zur Verfügung. Der Restfederweg 78 beträgt bevorzugt zwischen einer halben Gewindesteigung 72 und zwei Gewindesteigungen 72.

Nun kann das Gewindesegment 34 (Fig. 1, 7A) radial nach außen bewegt werden, so dass es mit dem Gewinde der Gewindeöffnung 22 in Eingriff gelangt und der Gewindesperrbolzen 14 kann angezogen werden, wie durch den Pfeil 80 in Fig. 7D angedeutet ist. Der Sockel 10 kommt zur Auflage am Gegenstand 20, beispielsweise indem die Auflagefläche 24 auf der Gegenfläche 26 aufliegt. Die Federeinrichtung 42 der Vorrichtung 1 kann nicht weiter axial gestaucht werden. Restfederweg 78 und Gesamtfederweg 74 sind aufgebraucht, wenn die Auflagefläche 24 und die Gegenfläche 26 mit einer vorbestimmten Klemmkraft 30 gegeneinandergedrückt sind. Die vorbestimmte Klemmkraft 30 ist bevorzugt erreicht, wenn der Gewindesperrbolzen 14 von Hand angezogen ist.

### Bezugszeichen

- 1: Vorrichtung
- 2: Halteabschnitt
- 4: Anschlag-, Hebe- oder Zurrmittel
- 6: Aufbau
- 8: Auge, Öse
- 10: Sockel
- 12: Schwenkachse
- 14: Gewindesperrbolzen
- 16: Axialrichtung
- 18: Kopf
- 20: Gegenstand
- 22: Gewindeöffnung
- 24: Auflagefläche
- 26: Gegenfläche
- 28: Kraftfluss
- 30: Klemmkraft, vorbestimmte Klemmkraft
- 32: Unterseite des Kopfes
- 33: Schaft
- 34: Gewindesegment
- 36: Knopf oder Taster
- 38: Stößel
- 40: Kulissenführung
- 42: Federeinrichtung
- 44: Aussparung bzw. Vertiefung
- 46: Federelement
- 48: Durchgangsöffnung
- 50: Buchse, Lagerbuchse
- 52: Sockelkörper
- 54: mögliche weitere Stelle für Federelement bzw. Federeinrichtung
- 56: Kopfauflagefläche
- 58: Federkraft
- 60: Anschlag
- 62: Vorsprung
- 64: Bereitschaftsmarkierung
- 66: Erweiterung
- 68: Warnmarkierung
- 70: Gewinde des Gewindesegments
- 72: Steigung des Gewindes
- 74: Gesamtfederweg
- 76: Einsteckkraft
- 78: Restfederweg
- 80: Anzugsbewegung des Gewindesperrbolzens

## Patentansprüche

1. Vorrichtung (1) mit einem Halteabschnitt (2), an dem ein Anschlag-, Hebe- oder Zurrmittel (4) anbringbar ist, mit einem Sockel (10), an dem sich ein Halteabschnitt (2) befindet, mit einem sich in einer Axialrichtung (16) wenigstens abschnittsweise durch den Sockel (10) erstreckenden und mit wenigstens einem radial beweglichen Gewindesegment (34) versehenen Gewindesperrbolzen (14) zum Befestigen des Sockels (10) an einem mit einer Gewindeöffnung (22) versehenen Gegenstand (20) mittels einer Klemmkraft (30) und mit einer am Sockel (10) angebrachten, in der Axialrichtung (16) stauchbaren Federeinrichtung (42), die sich im Kraftfluss (28) der Klemmkraft (30) befindet.

2. Vorrichtung (1) nach Anspruch 1, wobei die Federeinrichtung (42) einen Gesamtfederweg (74) aufweist, der wenigstens zwei Steigungen (72) des Gewindes (70) des Gewindesegments (34) beträgt.

3. Vorrichtung (1) nach Anspruch 1 oder 2, wobei die Federeinrichtung (42) einen Restfederweg (78) von wenigstens einer Steigung (72) des Gewindes (70) des Gewindesegments (34) aufweist, wenn sie gestaucht ist.

4. Vorrichtung (1) nach einem der Ansprüche 1 bis 3, wobei der Gesamtfederweg (74) der Federeinrichtung (42) aufgebraucht ist, wenn der Gewindesperrbolzen (14) von Hand angezogen ist.

5. Vorrichtung (1) nach einem der Ansprüche 1 bis 4, wobei die Federeinrichtung (42) in wenigstens einer insbesondere im Sockel (10) ausgebildeten Aussparung (44) angeordnet ist.

6. Vorrichtung (1) nach einem der Ansprüche 1 bis 5, wobei die Federeinrichtung (42) an einer Auflagefläche (24) des Sockels (10), die zur Anlage am Gegenstand (20) ausgebildet ist und aus der der Gewindesperrbolzen (14) ragt, angeordnet ist.

7. Vorrichtung (1) nach einem der Ansprüche 1 bis 6, wobei sich die Federeinrichtung (42) zwischen einem Kopf (18) des Gewindesperrbolzens (14) und dem Sockel (10) abstützt.

8. Vorrichtung (1) nach einem der Ansprüche 1 bis 7, wobei sich die Federeinrichtung (42) zwischen einer den Gewindesperrbolzen (14) aufnehmenden Buchse (50) und einem die Buchse (50) aufnehmenden Sockelkörper (52) des Sockels (10) abstützt.

9. Vorrichtung (1) nach einem der Ansprüche 1 bis 8, wobei die Federeinrichtung (42) um den Gewindesperrbolzen (14) herum angeordnet ist.

10. Vorrichtung (1) nach einem der Ansprüche 1 bis 9, wobei der Halteabschnitt (2) einen am Sockel (10) schwenkbar gehaltenen, bügel- oder augenförmigen Aufbau (6) aufweist und die Schwenkbewegung des Aufbaus (6) bei weniger als um den vorbestimmten Betrag axial gestauchter Federeinrichtung (42) gegenüber der Schwenkbewegung des Aufbaus (6) bei um wenigstens den vorbestimmten Betrag gestauchter Federeinrichtung (42) eingeschränkt ist.

11. Vorrichtung (1) nach Anspruch 10, wobei die Schwenkbewegung des Aufbaus (6) durch den Kopf (18) des Gewindesperrbolzens (14) eingeschränkt ist.

12. Vorrichtung (1) nach einem der Ansprüche 1 bis 11 mit einer optischen Warnmarkierung (68), die sichtbar ist, solange die Federeinrichtung (42) um weniger als einen vorbestimmten Betrag gestaucht ist.

13. Vorrichtung (1) nach einem der Ansprüche 1 bis 12 mit einer optischen Bereitschaftsmarkierung (64), die erst sichtbar ist, wenn die Federeinrichtung (42) um wenigstens einen vorbestimmten Betrag gestaucht ist.

14. Vorrichtung (1) nach Anspruch 12 oder 13, wobei die Bereitschaftsmarkierung (64) nur dann sichtbar ist, wenn die Warnmarkierung (68) nicht sichtbar ist.

15. Vorrichtung (1) nach Anspruch 10, 12 oder 13, wobei der vorbestimmte Betrag der Stauchung der Federeinrichtung (42) erreicht ist, wenn der Gewindesperrbolzen (14) von Hand angezogen ist.
